(19)

Europäisches
Patentamt
European
Patent Office
Office européen
des brevets

(11) **EP 1 773 063 A1**

(12) **EUROPEAN PATENT APPLICATION**

(43) Date of publication:
**11.04.2007 Bulletin 2007/15**

(51) Int Cl.:
*H04N 7/26* (2006.01)　　*H04N 7/64* (2006.01)
*H04N 7/46* (2006.01)

(21) Application number: **05300477.6**

(22) Date of filing: **14.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing**
**92100 Boulogne-Billancourt (FR)**

(72) Inventors:
　• **Chen, Ying**
　**Hai Dian District**
　**100083, Beijing (CN)**

　• **Zhai, Jiefu**
　**Hai Dian District**
　**100083 Beijing (CN)**
　• **Xie, Kai**
　**Hai Dian District**
　**100086, Beijing (CN)**

(74) Representative: **Rittner, Karsten**
**Deutsche Thomson-Brandt GmbH,**
**European Patent Operations,**
**Karl-Wiechert-Allee 74**
**30625 Hannover (DE)**

(54) **Method and apparatus for encoding video data, and method and apparatus for decoding video data**

(57)　　H.264 (AVC) uses a network abstraction layer (NAL) to process and format encoded video data into packets (NALUs), which may be mapped to transport packets for transmission. For scalable video, a NALU contains either control information (SEI,SPS,SPS_S, PPS,PPS_S), reference picture video data (IDR,IDR_S), base-layer video data (BL) or enhancement-layer video data (EL). To enable the decoding even if transport packets are lost, and thus achieve SNR scalability, video data packets of non-IDR pictures get a sequence number. A method for decoding such packetized video data comprises the steps of buffering the transport packets, extracting transport packet sequence numbers and the received video data packets, storing the video data packets containing control data (SEI,SPS,SPS_S,PPS_H,PPS_L, PPS_S_H,PPS_S_L), determining the application packet number (CN) of a missing or defective transport packet containing EL picture data (EL#1,EL#2,...), determining and upsampling the corresponding base-layer picture, generating a new packet with default header and upsampled base-layer picture data, and decoding the buffered picture data.

Fig.1

EP 1 773 063 A1

**Description**

Field of the invention

This invention relates to a method and an apparatus for encoding video data, and to a method and an apparatus for decoding video data.

Background

The standard ISO/IEC 14496-10, also known as H.264, AVC or MPEG-4 Part 10, uses two layers: a video coding layer (VCL) and a network abstraction layer (NAL). The VCL uses spatial and temporal redundancy reduction in the encoder, and thus temporal and spatial prediction and residual update in the decoder. One picture in a group-of-pictures (GOP) is intra coded, i.e. encoded with all information included, and the other pictures are inter coded, i.e. encoded with reference to one or more other pictures. One feature of H.264 is Instantaneous Decoder Refresh (IDR), meaning that upon reception of an IDR picture the decoder deletes all its previously stored reference pictures for resynchronization. Further, each picture can consist of one or more segments or slices, which are encoded separately. Different types of predictive slices (e.g. P-slices, B-slices), intra slices (I-slices) and IDR slices are possible. IDR slices always form a complete IDR picture, and thus contain only intra coded macroblocks. In the following, difference is made between IDR coded slices and non-IDR coded slices.

The NAL processes and formats the encoded video data from the VCL according to the utilized transmission and/or storage type, and thus is the codecs interface to the outside world. It uses variable sized packets called NAL units (NALUs) that can be transmitted e.g. over networks. In packet-oriented networks, NALUs are mapped to transport packets, like e.g. real-time protocol (RTP) packets, which typically include one complete NALU. A NALU contains all data of a slice, or a complete set of control data of a certain type. These control data types are basically Supplementary Enhancement Information (SEI), Segment Parameter Set (SPS) and Picture Parameter Set (PPS).

H.264 SVC (scalable video coding) is a new approach of the Joint Video Team (JVT) of ISO/IEC MPEG and the ITU-T Video Coding Expert Group (VCEG) on using H.264/AVC for achieving temporal, spatial and SNR scalability. It is based on standard H.264/AVC, but employs a dual-layer or multi-layer image concept, with a base-layer (BL) and one or more enhancement-layers (EL) for different spatial resolutions. E.g. the BL can be QCIF while the EL is CIF. Consequently, the BL has much lower data rate than the EL, so that only little of the data are BL data, e.g. only 20%. BL and EL have separate control data sets, which are transmitted in separate NALUs.

Further, for a given bit stream generated by an encoder, a decoder can choose what level of temporal scalability is required for decoding, based on the fixed bit stream. However, for SNR and spatial scalability the decoder has no possibility today. If the decoder wants to customize the SNR level or the spatial level for a multi-layered bit stream, the whole bit stream is extracted before decoding. That means e.g. if a two-layered spatial scalable bit stream is generated and transmitted to a client, the client must tell the server which layer (e.g. QCIF or CIF) is required, and an extractor will reshape the bit stream to an actually new temporary bit stream for the application. Thus, the client must decide which layer to support before actually decoding, which is actually a layer-based spatial scalability and therefore rather inflexible. However, in many applications the network situation is always changing and the status of the network cannot be estimated exactly.

In common networks, usually bit errors occur. A NAL packet with one or more bit errors is unusable, and therefore discarded. Though NAL packets can be retransmitted, this takes time and generates additional network traffic, particularly in the case of multicast or broadcast. Thus, scalability is reduced today to providing either base-layer quality or full quality, where the latter is only possible when no bit errors occur.

Summary of the Invention

When data of the enhancement-layer (EL) are missing, especially in the case of only few missing data, e.g. when a single NALU is discarded, it would be good if the correctly received EL data could still be used.

The present invention provides an error concealment technique for enhanced spatial scalability, which improves robustness particularly for network adaptive applications. The gist of the invention is that for a NAL packet or NALU of the spatial EL that was lost during the (network) transmission, a "virtual" default NAL packet is generated at the receiver side and provided to the decoder, so that the decoder may handle this "virtual" default NAL packet properly, i.e. without crash. With this virtual default NAL packet, the decoder may also utilize further correctly received packets with EL information. In the following, the virtual default packets are only called "default packets".

Thus, the decoding method and the decoder according to the invention may provide various fine levels of spatial scalability, or rather spatial scalability on NALU level. This corresponds to slice level, since NALUs with picture data contain full slices.

According to the invention, if a packet of the EL is lost then the respective EL image is generated by upsampling an image from the BL. In particular, the upsampled BL image is the one that is corresponding to the missing EL image with respect to display time, i.e. the EL image is generated from the BL image that it was supposed to enhance. The more packets are lost, the worse will the quality after the decoding process be. However, the worst case is that all the packets of the EL are lost, and then the quality of the decoded sequence is just like the upsampled version of the sequences decoded from the BL bit stream. Full quality can be provided if all the packets of the EL are correctly received.

In principle, the present invention provides a method for decoding packetized video data, wherein the packetized video data belong to at least two quality layers, namely a BL and an EL, and wherein a video data packet contains either control information, BL video data or EL video data, and the video data may be of IDR or non-IDR type. The method comprises the steps of receiving video data packets, extracting from the video data packets control information and storing the control information, detecting that a non-IDR type packet with picture data of the EL is missing or unusable, determining and upsampling the BL picture data corresponding to the missing or unusable EL data, generating a default packet, wherein the header of the default packet is generated from the stored control information and the payload of the default packet contains the upsampled video data of the determined BL data, and finally decoding the sequence of video data packets.

More particularly, one aspect of the present invention provides a method for decoding packetized video data being received in transport packets, wherein the packetized video data belong to at least two quality layers, namely a BL and an EL, and wherein each of the video packets contains either control data or video data belonging to one of the layers. The method for decoding packetized video data comprises the steps of

buffering received transport packets,

extracting transport packet sequence numbers and application packet sequence numbers (current_nal_number) from them, wherein the application packet sequence numbers may be in the transport packet headers and/or in the headers of the contained video application packets (NALUs), and wherein some video application packets contain parameter sets valid for one or more of said layers, extracting from the video data packets control data (SEI, SPS,SPS_S,PPS_H,PPS_L,PPS_S_H,PPS_S_L), and storing the control data,

detecting from the extracted transport packet sequence numbers and/or application packet sequence numbers that at least one transport packet or application packet is missing or defective, and

detecting that the missing or defective packet contained video data of an EL, wherein the application packet sequence numbers, and optionally also identification data, from the received neighbor application packets are used. In particular, the transport packet sequence number of a missing transport packet can be deduced from the received neighbor transport packets, and from the transport packet number the application packet number (current_nal_number) can be calculated, e.g. by adding an offset, which can be determined from the offset that the neighbor packets have, and from the application packet number can be determined if the missing packet contained BL or EL data. Alternatively, the application packet number (current_nal_number) of a missing video application packet may be included in and read from the transport packet header. While for missing control data packets or BL packets retransmission may be requested, for each missing EL packet a default packet is generated and stored in the buffer. The packet header of the default packet is generated using the parameter sets extracted from the control data packets.

Now the packet is formally correct and could be provided to a decoder, so that the decoder receives a continuous packet sequence and therefore maintains synchronization. However, a further advantage of the invention is that the quality of the decoded video can be improved even if several non-IDR enhancement layer packets are missing. Therefore the following steps are performed.

The method according to the invention continues with the steps of determining the BL picture corresponding to the default packet, upsampling the video data in the determined BL packet, and inserting the upsampled video data into the default packet within the buffer, so that from the buffered video application packets (NALUs) a video sequence can be assembled. Clearly the default packet can also be assembled before being buffered.

The parameter sets referring to the enhancement layer comprise at least a Sequence Parameter Set and two Picture Parameter Sets (PPS), which have corresponding identifiers (SPSid, PPSid_L, PPSid_H).

If in one embodiment of the invention NAL packets with control data or BL data are missing, the receiver requests retransmission for them.

Correspondingly, according to one aspect of the present invention, a method for encoding packetized video data, the video data packets containing control information, BL video data or EL video data, and the BL or EL video data containing either reference pictures (IDR) or non-reference pictures (non-IDR), comprises assigning continuous sequence numbers to the non-reference (non-IDR) video data packets, wherein the sequence numbering restarts after each reference video data packet (IDR), and inserting the sequence number of a picture into the header of the video packet and/or into the header of the transport packet that contains the respective picture data.

In particular, the method for encoding video data for transmission comprises the steps of

generating or receiving video data packets, the video data packets containing reference picture slices (IDR,IDR_S), BL or EL non-reference picture slices (non-IDR), or control data,

assigning to the video data packets that contain non-reference picture slices continuous application sequence numbers (current_nal_number), wherein counting of the application sequence numbers restarts after reference picture slices (IDR,IDR_S),

packing the video data packets into transport packets, wherein the application sequence numbers of the video data packets are inserted into the respective video data packet headers and/or into the transport packet headers, and assigning and inserting transport packet sequence numbers to the transport packets. Then the transport packets are ready for being transmitted.

A receiver or decoder according to the invention has means for detecting missing or erroneous NAL packets of the EL, and means for replacing these packets with default NAL packets that it constructs itself. Default NAL packets may have a type indication of a certain reserved NAL type, e.g. 0x16. These default NAL packets are forwarded to the decoder instead of the missing or erroneous NAL packets. Then the decoder constructs slice header information when encountering a default NAL packet, by upsampling BL data. Thus, a robust decoder is able to handle a loss of NAL packets of the spatial enhancement-layer. Such decoder may support applications with bit rates in the range between the base-layer bit rate and the enhancement-layer bit rate,

Advantageous embodiments of the invention are disclosed in the dependent claims, the following description and the figures.

Brief description of the drawings

Exemplary embodiments of the invention are described with reference to the accompanying drawings, which show in

Fig.1 the NAL structure of a H.264/AVC video bit stream;

Fig.2 the NAL structure of Fig.1 with transport packet numbers and application packet numbers; and

Fig.3 the reconstruction process for an EL picture within a GOP.

Detailed description of the invention

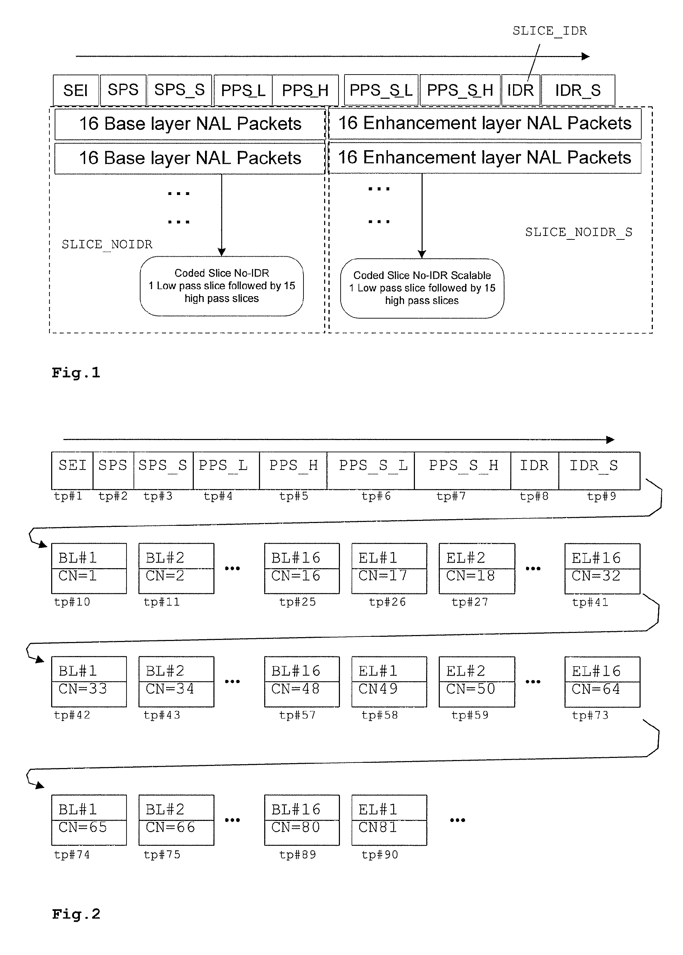

As Fig.1 shows, the sequence of NAL packets in a H.264/AVC video bit stream contain Supplementary Enhancement Information (SEI), sequence parameter set (SPS), sequence parameter sets in scalable extension (SPS_S), picture parameter sets (PPS), picture parameter sets in scalable extension (PPS_S), then coded slice of an IDR picture (SLICE_IDR) and coded slice of an IDR picture in scalable extension (SLICE_IDR_S). Though generally a picture may be built of more than one slice, it is assumed here that a picture contains one slice. Each NAL packet with picture data contains data of a slice, and thus of a picture. Therefore a packet with coded slice of an IDR picture (SLICE_IDR) contains an IDR picture (IDR).

These packets are followed by (usually several) GOPs that are packed into packets with non-IDR pictures (SLICE_NOIDR) and non-IDR picture in scalable extension (SLICE_NOIDR_S).

E.g. if a bit stream has two layers and the GOP size is 16, then for each GOP there are 16 non-IDR pictures for the BL and then 16 non-IDR scalable pictures for the EL.

The present invention has three parts, namely the system part, the syntax part and the logical part. The system part detects packet loss and provides a ("virtual") default packet if a packet loss happens, the syntax part constructs necessary slice header information for the decoder when encountering a virtual default packet, and the logical part provides the upsampled decoded frames to the virtual default packets.

The system part

The system part detects if a packet of an EL is lost, and replaces it with a default packet. At first, if the client receives a bit stream from the fallible network, it can detect packet loss e.g. from transport packet numbering, and then deduce the application packet number and thus the type of the lost packet. One possible solution is to add a system header in every transport packet before transmission in the server. The transport packets may e.g. be real-time protocol (RTP) packets. In one embodiment, the system header contains a NAL sequence number (current_nal_number) and an RTP sequence number that were inserted by the encoder or transmitter respectively. From the NAL sequence number (current_nal_number) can be deduced to which layer the NAL packet in this RTP packet belongs. The algorithm is similar to the one that is described below, in the syntax part.

Because the NAL packet may be very large and exceed the limit of an RTP packet, it may be necessary to split it into several RTP packets to transmit. Since the encoder or transmitter adds an RTP sequence number to every RTP packet, the RTP sequence number of a transport packet can be used to determine which part of the NAL packet this RTP packet is in cases where a NAL packet uses more than one transport packet or in cases where the packet network may not guarantee that the sequence of the received packets is correct. For more efficient bandwidth usage it is also possible to bind some small NAL packets into one RTP packet for transmission. Then the system header may contain all the NAL sequence numbers of the included NALUs, or e.g. the first NAL sequence number and the number of successive packets, or similar.

When the client receives an RTP packet, it can based on the system header put the contained NAL packet into the correct position within the buffer to reconstruct the bit stream. Then when the client reads packets from this buffer and detects a packet loss, it can determine the type of the lost packet from the NAL sequence number, which increments by 1 for coded slice non-IDR NAL packets. If the lost packet is an EL packet, the client uses a default NAL packet, i.e. a dummy packet, to substitute the lost NAL packet. If the lost packet is a BL packet, it may send retransmission request to the server and wait until the packet is received before further processing.

In this scheme, it is possible to transmit BL data and EL data in different signal channels, or to create a retransmission channel with unicast mode while normal data is transmitted with multicast mode. Advantageously, the client can reconstruct the bit stream, detect the lost packet based on the system header and replace a lost EL NAL packet with a default NAL packet to fulfill the requirement of the decoder for a successive sequence of packets.

The syntax part

As Figs.1 and 2 show, the NAL packets are organized as a sequence of Supplementary Enhancement Information (SEI), sequence parameter set (SPS), sequence parameter set in scalable extension (SPS_S), picture parameter sets for low and high resolution (PPS_L,PPS_H), picture parameter sets in scalable extension for low and high resolution (PPS_S_L, PPS_S_H), coded slice of an IDR picture (SLICE_IDR) and coded slice of an IDR picture in scalable extension (SLICE_IDR_S).

These packets are followed iteratively by non-IDR pictures (SLICE_NOIDR) and non-IDR pictures in scalable extension (SLICE_NOIDR_S). To eliminate error propagation unto the next IDR slice, the encoder may force, additionally to the intra coded IDR frame, one or more intra coded frames (I-frame) for each GOP. However, the I-frame pictures are encoded using the NAL type syntax of the non-IDR pictures, both for BL and EL. Another encoder issue is that depending on the calculation capability of the decoder, the inter layer prediction could be disabled or enabled.

After the NAL packet of the type SLICE_IDR_S, all the NAL packets of the EL have the type SLICE_NOIDR_S, until the next NAL packet with type SLICE_IDR_S is encountered.

According to the invention, counting the NAL number, denoted e.g. as "current_nal_number", (re-)starts after the SLICE_IDR_S packet. The current_nal_number increments by one with each NAL packet in one of the GOPs, without counting the IDR slice NAL packets or SEI, SPS or PPS packets. In other words, only the coded no-IDR slice packets within the GOPs are counted, which includes the BL slices and all EL slices. In the next GOP, the counting of the current_nal_number continues until new IDR packets are received.

We know from the SEI packet the number of layers, and from the SPS and PPS packets whether the layer is scalable or not and whether the EL is an FGS or spatial scalable layer. Thus, we know how the different layers are constructed, i.e. how many ELs there are, and whether the EL is a fine grain scalability (FGS) EL or spatial EL. The receiver can calculate from the number of layers $n_{layer}$ = SEI.NumLayers and the GOP size (current_nal_number, CN) for a given NAL packet number to which layer the NAL packet belongs. Assuming that the first NAL packet number is zero, the following formula can be used (with '%' being the modulo operator and int being the integer operation that cuts decimal places):

$$\texttt{layer = int ((CN \% (GOP\_Size*}n_{layer}\texttt{))/ GOP\_Size)}$$

E.g. if the GOP size is 16, and the bit stream has three layers, namely a BL, a spatial EL and a FGS EL, then NAL packets #0-#15,#48-#63 etc. belong to the BL, #16-#31,#64-#79 etc. to the spatial EL and #32-#47,#80-#95 etc. to the FGS EL. The layer to which a packet with current_nal_number CN belongs can be calculated as

$$\texttt{layer = int (CN \% (16*3))/16) = int ((CN \% 48)/16)}$$

If the resulting value for 'layer' is 0 (as e.g. for values of CN = 0...15,48...63,... or CN = (0,...,15 + 48•n), we know that the current NAL packet (slice) is part of the BL (which is H.264 compatible); if 'layer' is 1, the NALU is part of the enhancement spatial layer; and if layer is 2, it is part of the enhancement FGS layer.

Without loss of generality, a syntax solution for the default NAL packet according to the present invention is described below for a two layered bit stream, a base layer and a spatial scalability layer. However, a similar strategy can be used if a more complicated layer structure is provided.

The first step is to store the global parameters, being those that are not specifically assigned to one or several slices. We use them to summarize the current_nal_number and all the parameters included in the parameter sets (SPSs, PPSs).

For each layer there is at least one sequence parameter set SPS. Normally each packet of coded slice will include an identifier to indicate which SPS it used. However, the default packet does not include such identifier. So we prepared the identifiers for the default packets by storing the SPS identifier of each layer. For more particular cases, if the SPS of a certain layer changes, we just store the most recently used SPS identifier of each layer. E.g. if a two-layered spatial scalable bit stream is provided by the server, we store in the decoder the SPS identifier of the spatial enhancement layer and update the identifier if more sequence parameter sets (SPSs) are available for this layer. Here, the SPS identifier of the BL needs not be stored, because the transmission of BL is guaranteed by requesting retransmission in case of errors. Once an SPS NALU is encountered, the identifier is saved for later utilization in the default packets. In another embodiment however it is possible to substitute also missing BL packets with default packets, which may have empty payload but a valid header. In this case it would be necessary to store also the BL parameter sets (SPS,PPS).

The default packet doesn't provide PPS identifier either, so these identifiers need also to be prepared. More specifically, for enhancement spatial layer slices, two PPS are required: one is for low-pass slices (PPS_L) and the other is for high-pass slices (PPS_H). Therefore for each layer at least two most recently used PPS identifiers are stored for the construction of default packets. If the substituted "virtual" slice is a low-pass slice, judging from the current_nal_number, the first low-pass PPS identifer (PPS_L) is assigned to the slice. Otherwise the high-pass PPS identifier (PPS_H) is assigned.

The current_nal_number is incremented by one if a NAL packet with the type of non-IDR coded slice is received (including the default packets).

In the second step, the current_nal_number, SPS identifier and PPS identifiers are used to generate for each default packet the slice header or packet header information. E.g. the following data structure can be used to generate necessary information for the slice or packet header of default packets.

```
struct DefaultParameterSet
{
        UInt SPSID;
        Int PPSID_L;
        Int PPSID_H;
        UInt GopSize;
        UInt CurrentCop;
        UInt Level;
        Bool LowPass;
        UInt Pocid;
        Int Poc[32];
        UInt TempLevelid;
        UInt Layer;
};
```

The layer of the structure can be obtained by using the formula below, with CN being the current_nal_number and $N_{layer}$ being the number of the layer:

$$layer = (CN \% (GOP\_Size * N_{layer})) / GOP\_Size$$

Without loss of generality, we only discuss the two-layer spatial scalability case with GOP size being less than or equal to thirty-two.

The SPSID is assigned to the stored SPS identifier of the most recent SPS for the spatial scalable layer. Besides, the following assignment is valid:

Level = log2_max_pic_order_cnt_lsb_minus4 + 2;
GopSize = 1<< Level;

where log2_max_pic_order_cnt_lsb_minus4 is known to be a syntax element of the SPS, and is used to specify the MaxPicOrderCntLsb used in picture order count related arithmetic as follows:

MaxPicOrderCntLsb = 2^(log2_max_pic_order_cnt_lsb_minus4+4)

The size of the pic_order_cnt_lsb parameter in the slice header is log2_max_pic_order_cnt_lsb_minus4 + 4 bits.

For the motion compensated temporal filtering (MCTF) GOP structure, the picture order count (POC) number defined as pic_order_cnt_lsb in slice_header_in_scalable_extension( ) or as slice_headerr, increments by GopSize iteratively. Therefore, a table can be used to assign the offset of the POC of a GOP period. For a GOP size of 4 the table is {4,2,1,3}; for a GOP size of 16 the table is {16,8,4,12,2,6,10,14,1,3,5,7,9,11,13,15}.

The table can be generated using the rule described by the MPEG-4 standard mentioned above, and will be assigned to the element POC of the above structure DefaultParameterSet.

Pocid = Poc[current_nal_number % GopSize];

TempLevelid = Level-log2(current_nal_number % GopSize +1);

LowPass = ((Pocid == GopSize) ? true : false);

Then we assign the values defined in
slice_header_in_scalable_extension( ).

if (LowPass)
      then pic_parameter_set_id = stored PPS for low-pass
      else pic_parameter_set_id = stored PPS for high-pass

Both PPS for low-pass and for high-pass are stored as PPSID_L and PPSID_H respectively in the above structure DefaultParameterSet.

GOP_Size = GopSize;

gop_id = ((current_nal_number / (GopSize*2)+1) % (1 « LOG2_GOP_ID_WRAP)

where '<<' is the shift operator and LOG2_GOP_ID_WRAP is a number to wrap the gop_id after a while, so that it becomes not so large.

pic_order_cnt_lsb = (Pocid + current_nal_number / (GopSize*2)) * GopSize

where 2 stands for the second spatial layer. In the general case of n layers, the 2 should be substituted by n.

decomposition_stages = Level;

if (LowPass == true)
      then picture_id_inside_gop = GopSize;
      else picture_id_inside_gop = Pocid % GopSize;

base_id_plusl = 1;

In the meantime, the layer identifier and its base layer identifier are stored for later use. This information is enough for the robust decoder according to the invention.

The logical part

First, the method for substituting a single frame is explained.

For a lost NALU, what is obtained now is only a (virtual) default NAL packet and a (virtual) default slice header that have been generated in the syntax part.

If it should be a low-pass picture, which can be decided by the value of the variable LowPass being true or false, go to the usual process for decoding low-pass frames (DecodeLowPass process), upsample the reconstructed BL and store it as the current reconstructed picture. Set a flag to indicate that this frame was upsampled, e.g. GopFrameIDStatus[picture_id_inside_gop]=1.

If it should be a high-pass picture, go to the usual process for decoding high-pass frames (DecodeHighPass process), upsample the reconstructed BL and also store it as the current reconstructed picture. Then set the same flag as before to indicate that this frame was upsampled, e.g. GopFrameIDStatus[picture_id_inside_gop]=1;

In the following, the method for the decode MCTF process of a GOP is explained.

After all the pictures of all the layers of a GOP are decoded, a reconstruction process will be invoked. Actually it is an inverse MCTF process, which needs update and prediction.

For the inverse update process, a loop is used to reconstruct each picture of the GOP.

In the loop, each picture is identified by the parameter picture_id_inside_gop. If the robust decoder according to the invention detects that the parameter GopFrameIDStatus[picture_id_inside_gop] is equal to 1, then it terminates the inverse update process for this picture, since it has already got the best possible reconstructed picture, obtained by using upsampling.

Also for the inverse prediction process a loop is used, to refine each picture of the GOP. If the robust decoder according to the invention finds GopFrameIDStatus[picture_id_inside_gop] being equal to 1, it terminates the inverse prediction process for this picture because of the same reason as the inverse update process.

We call the pictures reconstructed by neglecting the update and prediction processes the "robust pictures".

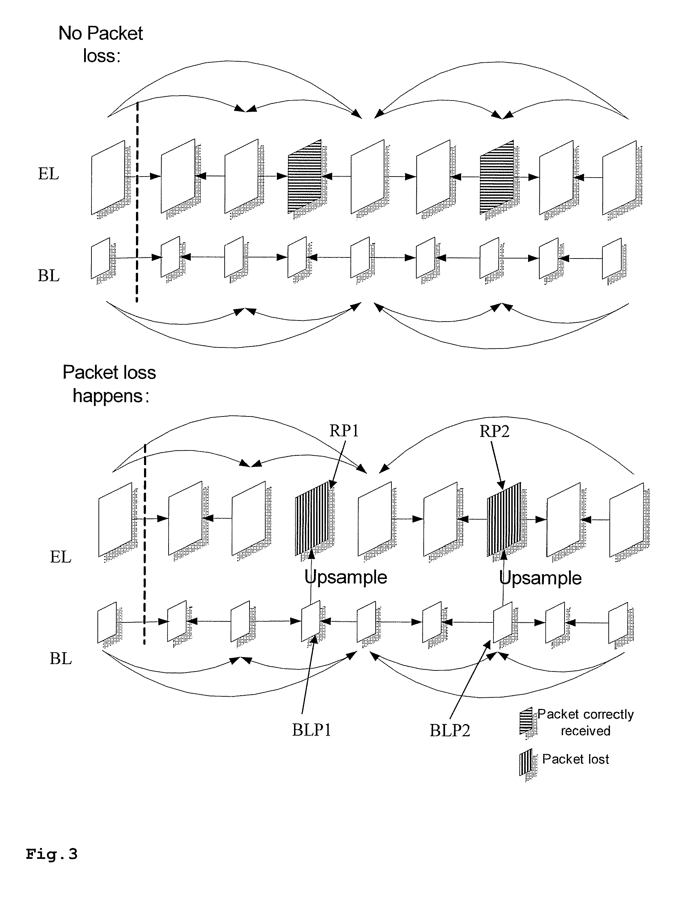

Fig.3 shows two robust pictures RP1,RP2 generated from their corresponding BL pictures BLP1,BLP2 and put into (virtual) default packets. Although these robust pictures are generated only using their corresponding BL pictures and don't need the neighboring pictures as a reference, the robust pictures can be used as references for the other normal pictures in the prediction and update process. That means if it is a lost packet, the motion compensation of this picture doesn't need to be done, however the upsampled robust pictures can be used to predict the other pictures during the motion compensation process if it is specified in the syntax of other coded slices.

After the reconstruction process of a GOP, all the GopFrameIDStatus flags will be set to 0 again.

In one embodiment of the invention, a device for decoding packetized video data received in transport packets, wherein the packetized video data belong to at least two quality layers being a BL and an EL, and wherein a video data packet contains either control information data, reference picture video data, BL video data or EL video data, such as NAL packets, comprises

buffering means for buffering received transport packets, means for extracting from the transport packets transport packet sequence numbers,

means or extracting from the transport packets the video data packets,

means for extracting the control information data from video data packets and for storing the control data,

means for extracting the application packet numbers (CN) of the received video data packets,

means for detecting from the transport packet sequence numbers and/or the application packet numbers (CN) that at least one transport packet is missing or defective,

means for determining from said extracted application packet numbers the application packet number of the missing or defective video data packet,

means for determining from the application packet number of the missing or defective video data packet that the missing or defective video data packet contained enhancement layer picture data,

means for determining the base layer picture corresponding to the enhancement layer picture of the missing or defective video data packet,

means for generating and buffering a new video data packet, wherein the header of the new video data packet is generated from the stored control data and the payload of the video data packet is generated from said determined base layer picture, and

means for decoding the buffered picture data.

Further in said apparatus, the means for generating the new video data packet may comprise

means for determining a picture order count value from the stored control data,

means for determining from the picture order count value a level value, being high-pass or low-pass, the level value being used to determine which of the stored control data are used to generate the header for the new video data packet, means for upsampling said determined base layer picture corresponding to the enhancement layer picture of the missing or defective video data packet, and means for inserting the upsampled base layer picture data into the payload of the new video data packet.

Further in said apparatus, said means for decoding the buffered video data may comprise means for performing update and prediction steps, wherein the updating and the prediction steps are not executed for said new video data packet.

Further, said apparatus may comprise means for identifying said new video data packet by an indication that makes it different from correctly received video data packets.

Further, said apparatus may comprise means for requesting retransmission of the missing or defective packet if the missing or defective packet is a control data packet, reference picture data packet or non-reference base layer picture data packet.

The proposed method and apparatus in this invention utilize virtual NAL packets to handle packet loss, while especially focusing on the spatial scalability, by upsampling the reconstructed BL picture and neglecting the update and prediction process for this picture, and by using these upsampled robust pictures as references of other pictures.

Therefore the present invention provides a robust decoder that supports scalability in the decoder in a large range of bit rates rather than just a scalability of only several kinds of fixed bit rates for a generated bit stream. The decoder and the whole system will work well if any packets of the EL are lost. While an EL packet loss will lead to a crash for the current JSVM, the robust decoder is a necessary foundation for a stable demo system or product based on the current SVC standard.

**Claims**

1. Method for encoding video data for transmission, comprising the steps of

   - generating or receiving video data packets, the video data packets containing reference picture slices (IDR, IDR_S), base-layer non-reference picture slices (BL), enhancement-layer non-reference picture slices (EL) or control data (SEI,SPS, SPS_S,PPS_L,PPS_H,PPS_S_L,PPS_S_H);
   - adding application sequence numbers (CN) to the video data packets that contain non-reference picture slices (BL,EL), wherein counting of the application sequence numbers (CN) restarts after video data packets that contain reference picture slices (IDR,IDR_S);
   - packing the video data packets into transport packets;
   - adding transport packet sequence numbers to the transport packets; and
   - transmitting the transport packets.

2. Method according to claim 1, further comprising the step of replacing one or more video data packets that contain enhancement-layer non-reference picture slices (EL) with default packets with empty payload.

3. Method according to claim 1 or 2, wherein said reference picture slices (IDR) are intra coded and said non-reference picture slices (BL,EL) may be intra coded or inter coded.

4. Method for decoding packetized video data received in transport packets, wherein the packetized video data belong to at least two quality layers being a base-layer and an enhancement-layer, and wherein a video data packet contains either control information data (SEI,SPS,SPS_S,PPS_H,PPS_L,PPS_S_H, PPS_S_L), reference picture video data (IDR,IDR_S), non-reference base-layer video data (BL) or non-reference enhancement-layer video data (EL), the method comprising the steps of

   - buffering received transport packets;
   - extracting transport packet sequence numbers from the received transport packets;
   - detecting if the transport packets or the video data packets included in the transport packets contain application packet sequence numbers (CN) of the video data packets, and extracting the detected application packet sequence numbers (CN);
   - extracting from the video data packets control information data (SEI,SPS,SPS_S,PPS_H,PPS_L, PPS_S_H, PPS_S_L) ;
   - storing the extracted control information data (SEI,SPS,SPS_S,PPS_H,PPS_L,PPS_S_H,PPS_S_L) ;
   - detecting from the transport packet sequence numbers and/or the application packet sequence numbers (CN) that at least one transport packet or video data packet is missing or defective;
   - determining from said extracted application packet sequence numbers (CN) the application packet sequence number of the missing or defective video data packet;
   - determining from the application packet sequence number(CN) of the missing or defective video data packet that the missing or defective video data packet contained non-reference enhancement-layer video data (EL#1, EL#2,...);
   - determining the base-layer picture (BLP1,BLP2) corresponding to the enhancement-layer picture of the missing or defective video data packet;
   - generating and buffering a new video data packet, wherein the header of the new video data packet is generated from the stored control information data (SEI,SPS,SPS_S,PPS_H,PPS_L,PPS_S_H,PPS_S_L), and the payload of the video data packet is generated by upsampling said determined base-layer picture (BLP1,BLP2); and
   - decoding the buffered picture data.

5. Method according to claim 4, wherein the step of generating the new video data packet comprises the steps of

   - determining a picture order count (POC) value from the stored control data;
   - determining from the picture order count (POC) value a level value, being high-pass or low-pass, the level value being used to determine which of the stored control data SEI,SPS,SPS_S,PPS_H,PPS_L, PPS_S_H, PPS_S_L) are used to generate the header for the new video data packet;
   - upsampling said determined base-layer picture corresponding to the enhancement-layer picture of the missing or defective video data packet; and
   - inserting the upsampled base-layer picture data into the payload of the new video data packet.

**6.** Method according to claim 4 or 5, wherein said decoding the buffered video data comprises a prediction step and an update step, and wherein the prediction step and the update step are not executed for said new video data packet.

**7.** Method according to the preceding claim, wherein said new video data packet has an indication flag set, which correctly received video data packets have not set and which is evaluated for deciding whether to execute the prediction and update steps.

**8.** Method according to any of the claims 4-7, further comprising the step of

- requesting retransmission of the missing or defective packet if the missing or defective packet is a control data packet (SEI,SPS,PPS, SPS_S,PPS_S), reference picture data packet (IDR, IDR_S) or non-reference base-layer picture data packet (BL#1,BL#2,...).

**9.** Method according to any of the previous claims, wherein video data packets have variable size and wherein a transport packet may contain one or more video data packets or a part of a video data packet.

**10.** An apparatus using a method according to any of the previous claims.

SLICE_IDR

| SEI | SPS | SPS_S | PPS_L | PPS_H | PPS_S_L | PPS_S_H | IDR | IDR_S |
|-----|-----|-------|-------|-------|---------|---------|-----|-------|

| 16 Base layer NAL Packets | 16 Enhancement layer NAL Packets |
|---|---|
| 16 Base layer NAL Packets | 16 Enhancement layer NAL Packets |

. . .

. . .

SLICE_NOIDR

SLICE_NOIDR_S

Coded Slice No-IDR
1 Low pass slice followed by 15 high pass slices

Coded Slice No-IDR Scalable
1 Low pass slice followed by 15 high pass slices

**Fig.1**

| SEI | SPS | SPS_S | PPS_L | PPS_H | PPS_S_L | PPS_S_H | IDR | IDR_S |
|-----|-----|-------|-------|-------|---------|---------|-----|-------|
| tp#1 | tp#2 | tp#3 | tp#4 | tp#5 | tp#6 | tp#7 | tp#8 | tp#9 |

| BL#1 CN=1 | BL#2 CN=2 | ... | BL#16 CN=16 | EL#1 CN=17 | EL#2 CN=18 | ... | EL#16 CN=32 |
|---|---|---|---|---|---|---|---|
| tp#10 | tp#11 | | tp#25 | tp#26 | tp#27 | | tp#41 |

| BL#1 CN=33 | BL#2 CN=34 | ... | BL#16 CN=48 | EL#1 CN49 | EL#2 CN=50 | ... | EL#16 CN=64 |
|---|---|---|---|---|---|---|---|
| tp#42 | tp#43 | | tp#57 | tp#58 | tp#59 | | tp#73 |

| BL#1 CN=65 | BL#2 CN=66 | ... | BL#16 CN=80 | EL#1 CN81 | ... |
|---|---|---|---|---|---|
| tp#74 | tp#75 | | tp#89 | tp#90 | |

**Fig.2**

No Packet
loss:

EL

BL

Packet loss
happens:

RP1    RP2

EL

Upsample    Upsample

BL

BLP1    BLP2

Packet correctly
received

Packet lost

Fig.3

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ARGYRIOU A ET AL: "Streaming H.264/AVC video over the internet" CONSUMER COMMUNICATIONS AND NETWORKING CONFERENCE, 2004. CCNC 2004. FIRST IEEE LAS VEGAS, NV, USA 5-8 JAN. 2004, PISCATAWAY, NJ, USA,IEEE, 5 January 2004 (2004-01-05), pages 169-174, XP010696819 ISBN: 0-7803-8145-9 * page 170, left-hand column, paragraph II.B - page 171, right-hand column, last line * | 1-10 | INV. H04N7/26 H04N7/64 H04N7/46 |
| Y | SEELING P ET AL: "Video coding with multiple descriptors and spatial scalability for device diversity in wireless multi-hop networks" CONSUMER COMMUNICATIONS AND NETWORKING CONFERENCE, 2005. CCNC. 2005 SECOND IEEE LAS VEGAS, NV, USA 3-6 JAN. 2005, PISCATAWAY, NJ, USA,IEEE, 3 January 2005 (2005-01-03), pages 278-283, XP010787650 ISBN: 0-7803-8784-8 * page 278, left-hand column, paragraph I - page 278, right-hand column, paragraph I.A * * page 280, right-hand column, paragraph IV * * page 282, right-hand column, paragraph B * | 1-10 | |

TECHNICAL FIELDS SEARCHED (IPC)

H04N

-/--

The present search report has been drawn up for all claims

| Place of search | Date of completion of the search | Examiner |
|---|---|---|
| Munich | 26 February 2007 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 30 0477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHENG H S ET AL: "Efficient partial retransmission ARQ strategy with error detection codes by feedback channel" IEE PROCEEDINGS : COMMUNICATIONS, INSTITUTION OF ELECTRICAL ENGINEERS, GB, vol. 147, no. 5, 16 October 2000 (2000-10-16), pages 263-268, XP006013988 ISSN: 1350-2425 * abstract * ----- | 1-10 | |
| A | STOCKHAMMER T ET AL: "Video coding and transport layer techniques for H.264/AVC-based transmission over packet-lossy networks" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 481-484, XP010670040 ISBN: 0-7803-7750-8 * page 481, paragraph 2.1 * ----- | 1-10 | TECHNICAL FIELDS SEARCHED (IPC) |

The present search report has been drawn up for all claims

| Place of search | Date of completion of the search | Examiner |
|---|---|---|
| Munich | 26 February 2007 | Schoeyer, Marnix |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)